# FASCICULE DE BREVET EUROPEEN

(11) **EP 3 688 658 B1**
(45) Date de publication et mention de la délivrance du brevet: **20.07.2022**
(21) Numéro de dépôt: 18772827.4
(22) Date de dépôt: 26.09.2018
(51) Int. Cl.: G06K 7/10, G06Q 10/08, G06K 17/00

(54) **SYSTÈME D'INVENTAIRE D'OBJETS CONTENUS DANS UN ESPACE LIMITÉ PAR UNE ENCEINTE**
BESTANDSVERWALTUNGSSYSTEM FÜR GEGENSTÄNDE IN EINEM RAUM, DER DURCH EINE KAMMER BEGRENZT IST
INVENTORY SYSTEM FOR OBJECTS CONTAINED IN A SPACE BOUNDED BY A CHAMBER

(30) Priorité: 27.09.2017 FR 1758941
(43) Date de publication de la demande: 05.08.2020
(73) Titulaire: Nexess, 06250 Sophia Antipolis (FR)
(72) Inventeur: MONBLANC, Jean-Anaël, 06250 Sophia Antipolis (FR); NGUYEN, Duy Thong, 06250 Sophia Antipolis (FR); RENO, Frédéric, 06250 Sophia Antipolis (FR)
(74) Mandataire: Cabinet Le Guen Maillet
(86) Numéro de dépôt international: PCT/EP2018/076128
(87) Numéro de publication internationale: WO 2019/063612

(56) Documents cités:
- EP-A1- 3 190 540
- WO-A1-2009/004366
- WO-A1-2016/087502
- US-A- 5 804 810

## Description

La présente invention concerne un système d'inventaire d'objets contenus dans un espace limité par une enceinte utilisant la technologie d'identification par ondes radiofréquences (RFID : Radio Frequency Identification) ainsi qu'un procédé d'inventaire mis en œuvre par un tel système d'inventaire.

De manière générale, un système utilisant la technologie RFID est constitué de trois types d'éléments :
- au moins un transpondeur, dit aussi tag, constitué d'un circuit électronique pourvu d'une antenne pour émettre et recevoir des données sous forme d'ondes radiofréquences, le circuit comportant au moins une mémoire dans laquelle est stockée un identifiant dudit transpondeur,
- un point de lecture constitué lui aussi d'un circuit électronique pourvu d'une antenne pour émettre et recevoir des données également sous forme d'ondes radiofréquences, et
- une unité de contrôle reliée au point de lecture et mettant en œuvre une application.

Le fonctionnement d'un tel système RFID est le suivant. Au commencement de la procédure d'identification, le point de lecture émet une onde électromagnétique modulée dite, par la suite, de réveil, à destination de chaque tag du système. A sa réception, un tag, situé dans une zone de couverture où le champ électromagnétique généré par le point de lecture est à un niveau suffisamment élevé, est alimenté électriquement par l'onde électromagnétique, sort de son état de veille, devient actif et émet alors une donnée d'identification qui lui est propre sous forme d'une onde électromagnétique modulée. Cette donnée d'identification est reçue par le point de lecture qui procède alors à l'identification du tag considéré.

Dans l'application à un système d'inventaire envisagée ici, chaque tag est fixé à un objet, tel qu'un outil servant à la maintenance d'un atelier, d'une usine, etc. Les objets à inventorier sont rangés dans un espace clos, tel qu'un meuble, une servante, une armoire. Cet espace clos se subdivise en une pluralité de sous-espaces clos tels que par exemple des étagères, des tiroirs, etc.

Il est important de pouvoir déterminer si les objets sont dans un sous-espace clos donné parmi l'ensemble des sous-espaces clos. Il est aussi important de pouvoir autoriser ou non un inventaire d'un espace, d'une partie des espaces clos en fonction de l'identité de l'individu qui demande l'inventaire.

Le brevet US 5,804,810 divulgue un procédé d'inventaire d'objets contenus dans un espace clos délimité par une enceinte.

La présente invention a pour but de résoudre les inconvénients de l'art antérieur en proposant un procédé et un système d'inventaire d'objets contenus dans un espace clos par une enceinte utilisant la technologie d'identification par ondes radiofréquences et qui permet de sécuriser l'inventaire des objets qui sont compris dans l'espace clos, voire dans un ou plusieurs sous-espaces clos imbriqués ou non si l'espace clos comporte une pluralité de sous espaces clos.

A cette fin, l'invention concerne un procédé d'inventaire d'objets contenus dans un espace clos délimité par une enceinte dans un système comprenant un tag fixé à chacun des objets à inventorier et un point de lecture pourvu d'au moins une antenne pour émettre une onde électromagnétique de réveil dans ledit espace clos afin qu'un tag, à sa réception, devienne actif et émette alors ses données d'identification à destination dudit point de lecture, caractérisé en ce que l'espace clos comporte une carte électronique comprenant un microcontrôleur et un tag double accès dont la mémoire est accessible par les ondes électromagnétiques émises par le point de lecture et accessible par le microcontrôleur, la carte électronique comportant en outre une mémoire accessible uniquement par le microcontrôleur, l'espace clos comportant au moins une antenne, le procédé comportant les étapes exécutées par le microcontrôleur de :
- détection d'une commande émise par le point de lecture et mémorisée dans la mémoire du tag double accès, la commande comprenant au moins un code d'identification,
- vérification de la compatibilité du code d'identification avec un code d'authentification mémorisé dans la mémoire accessible uniquement par le microcontrôleur,
- activation de l'antenne seulement si les codes sont compatibles.

L'invention concerne aussi un système d'inventaire d'objets contenus dans un espace clos délimité par une enceinte, ledit système comprenant un tag fixé à chacun des objets à inventorier et un point de lecture pourvu d'au moins une antenne pour émettre une onde électromagnétique de réveil dans ledit espace clos afin qu'un tag, à sa réception, devienne actif et émette alors ses données d'identification à destination dudit point de lecture, caractérisé en ce que l'espace clos comporte une carte électronique comprenant un microcontrôleur et un tag double accès dont la mémoire est accessible par les ondes électromagnétiques émises par le point de lecture et accessible par le microcontrôleur, la carte électronique comportant en outre une mémoire accessible uniquement par le microcontrôleur et l'espace clos comportant au moins une antenne, le microcontrôleur détectant une commande émise par le point de lecture et mémorisée dans la mémoire du tag double accès, la commande comprenant au moins un code d'identification, et en ce que le microcontrôleur commande l'activation d'au moins une antenne seulement si le code d'identification est compatible avec un code d'authentification mémorisé dans la mémoire accessible uniquement par le microcontrôleur.

Ainsi, il est possible de sécuriser l'inventaire de l'espace clos.

Selon un mode particulier, l'espace clos comprend un sous-espace clos et un relais composé d'antennes pour relayer les ondes électromagnétiques entre l'espace clos et le sous-espace clos, la commande émise par le point de lecture et mémorisée dans la mémoire du tag double accès comporte en outre une information identifiant un sous-espace clos et le microcontrôleur commande l'activation d'une antenne du relais seulement si le code d'identification est compatible avec un code d'authentification mémorisé dans la mémoire accessible uniquement par le microcontrôleur.

Ainsi, il est possible de n'autoriser un inventaire que pour une partie de l'espace clos.

Selon un mode particulier, l'espace clos comprend une pluralité de sous-espaces clos, l'espace clos comporte pour chaque sous-espace clos un relais composé d'antennes pour relayer les ondes électromagnétiques entre l'espace clos et le sous-espace clos et le procédé comporte les étapes exécutées par le microcontrôleur de :
- détection d'une commande émise par le point de lecture et mémorisée dans la mémoire du tag double accès, la commande comprenant au moins une information identifiant un sous-espace clos,
- activation d'une antenne du relais du sous-espace clos identifié et désactivation des antennes des autres relais.

Ainsi, l'inventaire est le reflet de chaque sous-espace clos, et il est alors possible de déterminer s'il y a des écarts dans la disposition des objets par rapport aux sous espaces clos dans lesquels ils devraient être placés.

Selon un mode particulier, le procédé comporte les étapes exécutées par le microcontrôleur de :
- détection d'une commande émise par le point de lecture et mémorisée dans la mémoire du tag double accès, la commande indiquant que les antennes des relais doivent être désactivées,
- désactivation d'une antenne de chaque relais.

Ainsi, il est possible de détecter des objets qui ne sont pas compris dans l'espace clos.

Selon un mode particulier, préalablement à l'émission de la commande par le point de lecture, le procédé comporte les étapes exécutées par le point de lecture de :
- identification de l'individu qui souhaite faire l'inventaire de l'espace clos,
- détermination si l'individu est habilité à effectuer l'inventaire d'au moins un sous-espace clos,
- transfert séquentiel d'une commande pour chaque sous-espace clos pour lequel l'individu est habilité.

Ainsi, il est possible de limiter la possibilité d'effectuer un inventaire qu'aux seules personnes habilitées.

Selon un mode particulier, chaque sous-espace clos comporte un tag, le procédé comporte une étape, exécutée par le point de lecture pour chaque sous-espace clos pour lequel l'individu est habilité, de réception des identifiants des objets qui sont compris dans le sous-espace clos et de l'identifiant du sous-espace clos et, lorsque les identifiants des objets et des identifiants des sous-espaces clos sont reçus le procédé comporte en outre les étapes de :
- émission par le point de lecture et mémorisée dans la mémoire du tag double accès, de la commande indiquant que les antennes des relais doivent être désactivées,
- activation d'une fenêtre temporelle pour la réception d'identifiants d'objets,
- inventaire des objets en ne prenant pas en compte les objets dont les identifiants sont reçus pendant la fenêtre temporelle.

Ainsi, il est possible d'éviter qu'un objet placé sur l'espace clos, à proximité du point de lecture ou par exemple dans une poche d'un individu, soit pris en compte lors de l'inventaire.

Selon un mode particulier, un sous-espace comprend un autre sous-espace clos et une autre carte électronique comprenant un microcontrôleur et un tag double accès et, lorsque la commande identifie l'autre sous-espace clos, la carte électronique comprise dans le sous-espace clos active l'antenne du relais du sous-espace clos comprenant l'autre sous-espace clos et la carte électronique comprise dans le sous-espace clos active l'antenne du relais de l'autre sous-espace clos.

Ainsi, il est possible de réaliser un inventaire de sous-espaces clos imbriqués dans un autre sous-espace clos.

Selon un mode particulier, si le point de lecture ne reçoit pas l'identifiant de l'autre sous-espace clos, le point de contrôle génère un message d'échec d'inventaire à destination de l'individu.

Ainsi, il est possible de déterminer si un sous-espace clos n'est pas présent ou est mal positionné dans l'espace clos.

Selon un mode particulier, l'alimentation en énergie électrique de la carte électronique est assurée à partir des ondes émises par le point de lecture.

Ainsi, un système de fourniture en énergie électrique tel qu'une batterie n'est pas nécessaire dans l'espace clos.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
la Fig. 1 est une vue schématique d'un système d'inventaire selon un premier mode de réalisation de la présente invention ;
la Fig. 2 est un exemple d'architecture d'un point de lecture selon la présente invention ;
la Fig. 3 est un exemple d'architecture d'une carte électronique comprise dans l'espace clos ;
la Fig. 4 représente un exemple d'algorithme exécuté par le point de lecture selon la présente invention ;
la Fig. 5 représente un exemple d'algorithme exécuté par un microcontrôleur de la carte électronique comprise dans l'espace clos selon la présente invention.

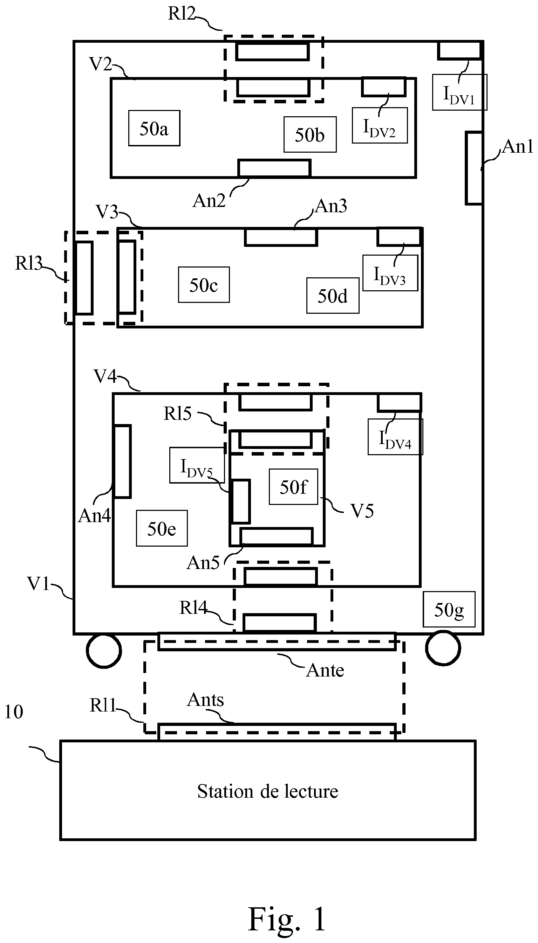

La Fig. 1 est une vue schématique d'un système d'inventaire selon un premier mode de réalisation de la présente invention.

Le système d'inventaire représenté à la Fig. 1 est prévu pour inventorier des objets qui sont contenus dans un espace clos V1 tel qu'un meuble, une armoire ou une servante d'atelier, qui peut contenir des éléments, tels que des étagères, des tiroirs formant des sous-espaces clos V2, V3, V4, des casiers tel que par exemple le sous-espace clos V5 qui est compris dans le sous-espace clos V4, etc. Cet espace clos et ces sous-espaces clos sont respectivement délimités par une enceinte métallique.

Les objets en question sont par exemple des outils (de référence générique 50) pour assurer la maintenance d'un atelier, d'une usine, etc., qui sont chacun pourvus d'un tag RFID (Radio Frequency IDentification : Identification par radiofréquence).

Sept outils 50a à 50g sont représentés dans la Fig. 1 par souci de simplification.

Les outils 50a et 50b sont compris dans le sous-espace clos V2, les outils 50c et 50d sont compris dans le sous-espace clos V3, l'outil 50e est compris dans le sous-espace clos V4, l'outil 50f est compris dans le sous-espace clos V5 et l'outil 50g est compris dans le sous-espace clos V1.

Le système d'inventaire comprend un point de lecture 10. Le point de lecture est par exemple constitué d'un dispositif informatique et d'un portique ou une architecture pourvue d'au moins une antenne Ants qui génère des ondes électromagnétiques vers une antenne Ante disposée sur l'espace clos V1. Le dispositif informatique est par exemple, un ordinateur, un téléphone intelligent, une tablette tactile. L'antenne Ante a pour fonction de relayer les ondes électromagnétiques reçues de l'antenne Ants du point de lecture 10 dans l'espace clos V1.

L'antenne Ants reçoit les ondes électromagnétiques comprises dans l'espace clos V1 par l'intermédiaire de l'antenne Ante.

Les antennes Ante et Ants forment un relai RL1.

Les ondes électromagnétiques sont par exemple des ondes UHF (Ultra Haute Fréquence).

Les antennes Ants et Ante sont mises en regard dans l'exemple de la Fig. 1, et peuvent aussi être décalées de quelques centimètres l'une de l'autre.

Dans une variante de réalisation, la station de lecture 10 est reliée à l'espace clos V1 par l'intermédiaire d'une liaison filaire.

L'espace clos V1 comporte une carte électronique I_{DV1} constituée d'au moins un tag double accès et d'un microcontrôleur. La carte électronique I_{DV1} est reliée par l'intermédiaire de fils coaxiaux à une pluralité d'antennes comprises dans l'espace clos V1 qui sont mises en regard avec des antennes comprises dans les sous-espaces clos V2, V3 et V4 pour former des relais R12, R13 et R14 qui relaient les ondes électromagnétiques émises par Ante et comprises dans l'espace clos V1 vers les sous-espaces clos V2, V3 et V4 et les ondes électromagnétiques comprises dans les sous-espaces clos V2, V3 et V4 vers l'espace clos V1 pour être ensuite relayées par le relais RL1.

L'espace clos V1 comporte une antenne An1 de lecture des tags comprise dans l'espace clos V1.

Le sous-espace clos V2 comporte une antenne An2 de lecture des tags comprise dans l'espace clos V2.

Le sous-espace clos V3 comporte une antenne An3 de lecture des tags comprise dans l'espace clos V3.

Le sous-espace clos V4 comporte une antenne An4 de lecture des tags comprise dans l'espace clos V4.

Le sous-espace clos V5 comporte une antenne An5 de lecture des tags comprise dans l'espace clos V5.

Dans l'exemple de la Fig. 1, le sous-espace clos V4 comporte une carte électronique I_{DV4} constituée d'au moins un tag double accès et d'un microcontrôleur. La carte électronique IDV4 est reliée à une antenne comprise dans l'espace clos V4 qui est mise en regard avec une antenne comprise dans le sous-espace clos V5 pour former un relais R15 qui relaie les ondes électromagnétiques comprises dans l'espace clos V4 délivré par la carte électronique I_{DV4} vers le sous-espace clos V5 et les ondes électromagnétiques comprises dans le sous-espaces clos V5 vers le sous-espace clos V4 et à destination de la carte électronique I_{DV4}.

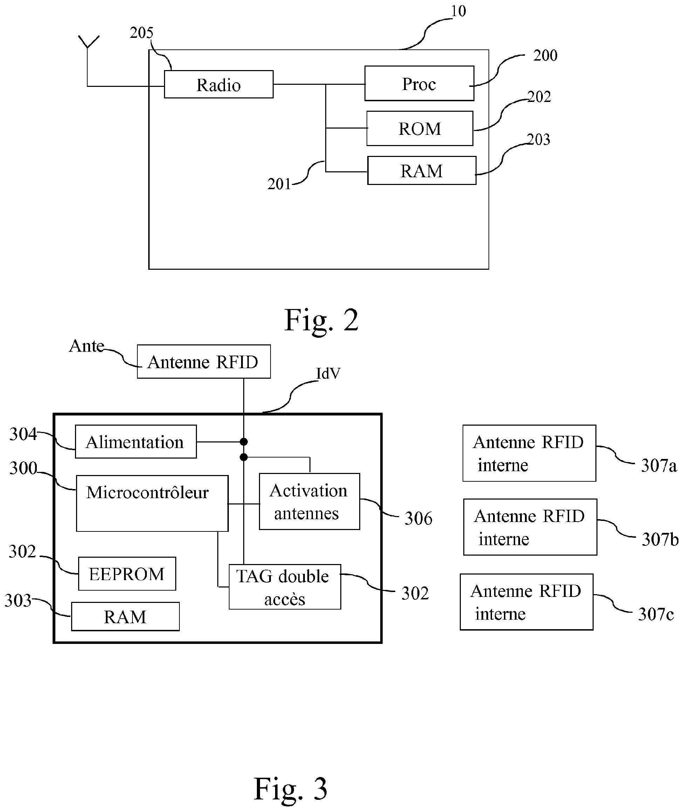

Les cartes électroniques I_{DV1} et I_{DV4} seront décrites plus en détail en référence à la Fig. 3.

Les espaces clos V2 et V3 comportent respectivement un tag double accès I_{DV2} et I_{DV3}.

Il est à remarquer ici que dans une variante de réalisation, une partie ou la totalité des relais RL1 à RL5 peuvent être remplacés par une liaison filaire.

Selon l'invention, l'espace clos comporte une carte électronique comprenant un microcontrôleur et un tag double accès dont la mémoire est accessible par les ondes électromagnétiques émises par le point de lecture et accessible par le microcontrôleur, la carte électronique comporte en outre une mémoire accessible uniquement par le microcontrôleur, l'espace clos comprend un sous-espace clos et un relais composé d'antennes pour relayer les ondes électromagnétiques entre l'espace clos et le sous-espace clos, le microcontrôleur :
- détecte une commande émise par le point de lecture et mémorisée dans la mémoire du tag double accès, la commande comprenant au moins une information identifiant un sous-espace clos et un code d'identification,
- vérifie la compatibilité du code d'identification avec un code d'authentification mémorisé dans la mémoire accessible uniquement par le microcontrôleur,
- active une antenne du relais seulement si les codes sont compatibles.

La Fig. 2 est un exemple d'architecture d'un point de lecture selon la présente invention.

Le point de lecture 10 selon la présente invention comprend :
- un processeur, micro-processeur, ou microcontrôleur 200 ;
- une mémoire volatile 203 ;
- une mémoire non volatile 202;
- une interface radio 205 bidirectionnelle, éventuellement une interface filaire non représentée en Fig. 2;
- un bus de communication reliant le processeur 200 à la mémoire ROM 203, à la mémoire RAM 203 et un module radio 205.

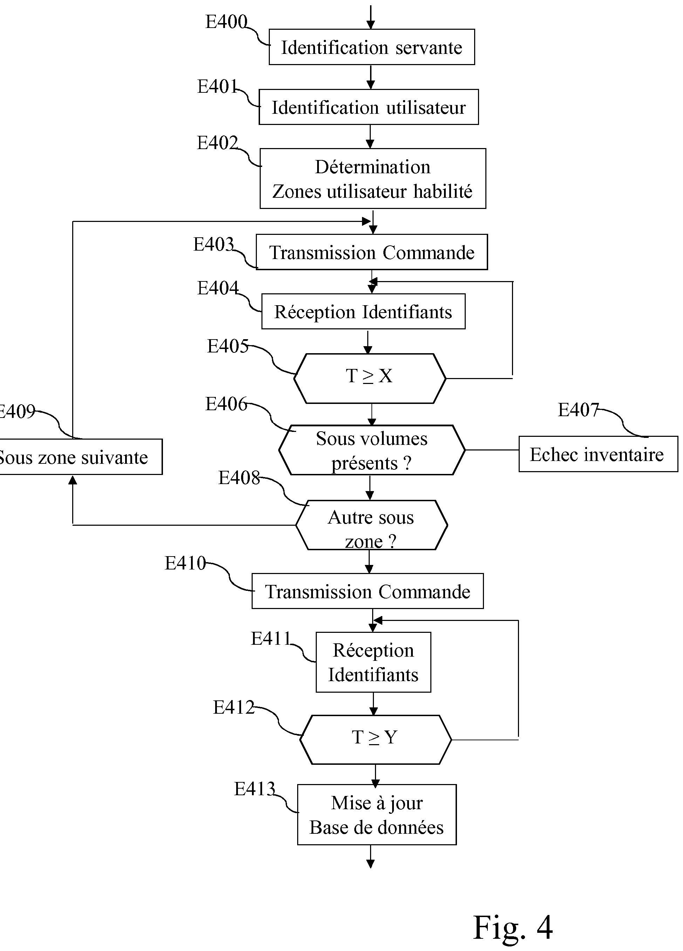

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le point de lecture selon la présente invention est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP *(Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig.** 3 est un exemple d'architecture d'une carte électronique comprise dans l'espace clos.

La carte électronique I_{DV1} est reliée à l'antenne RFID Ante, dite antenne RFID externe, qui reçoit et transmet des ondes électromagnétiques à destination du point de lecture 10. L'antenne RFID Ante transforme l'énergie électromagnétique des signaux émis par le point de lecture 10 en un signal électrique qui est délivré à un module d'alimentation 304. Le module d'alimentation 304 délivre l'énergie électrique pour alimenter les composants de la carte électronique I_{DV1}.

Selon la présente invention, l'ensemble des tags et des cartes électroniques compris dans l'espace clos V1 est alimenté en énergie électrique à partir des ondes électromagnétiques émises par l'antenne Ants.

Dans une variante de réalisation, si une liaison filaire existe entre le point de lecture 10 et l'espace clos V1, l'alimentation en énergie électrique de la carte électronique I_{DV1} est assurée par la liaison filaire.

De même, si une liaison filaire existe entre l'espace clos V1 et les sous-espaces clos V2 à V4, l'alimentation en énergie électrique de I_{DV2} à I_{DV4} est assurée par la liaison filaire.

De même, si une liaison filaire existe entre le sous-espace clos V4 et le sous-espace clos V5, l'alimentation en énergie électrique de I_{DV2} à I_{DV5} est assurée par la liaison filaire.

Le signal reçu par l'antenne RFID Ante est délivré à un module d'activation d'antennes 306 et à un tag double accès 302.

Le tag double accès 302 est dit à double accès car le point de lecture 10 peut écrire dans la mémoire du tag double accès 302 et un microcontrôleur 300 de la carte électronique I_{DV1} peut lire dans la mémoire du tag double accès 302.

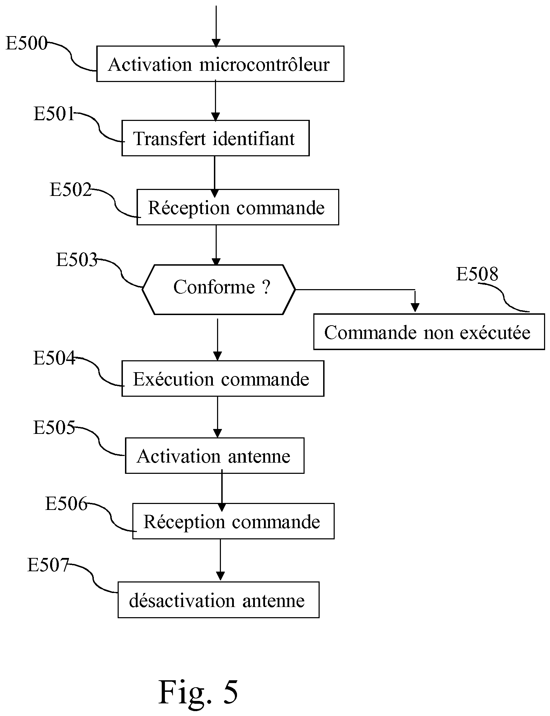

Le microcontrôleur 300 est capable d'exécuter des instructions chargées dans la mémoire volatile 303 à partir de la mémoire non volatile 302, par exemple une mémoire de type EEPROM, lorsque la carte électronique I_{DV1} selon la présente invention est mise sous tension. Le microcontrôleur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 5.

La mémoire non volatile 302 comporte en outre un code de vérification.

La carte électronique I_{DV1} est reliée à une pluralité d'antennes RFID dites antennes RFID internes 307a, 307b et 307c par l'intermédiaire du module d'activation d'antennes 306 et de câbles coaxiaux.

Le module d'activation d'antennes 306 est par exemple constitué d'un interrupteur pour chaque antenne RFID interne 307a, 307b et 307c. Lorsque que le microcontrôleur 300 commande la fermeture d'un interrupteur, l'antenne RFID interne reliée à l'interrupteur est adaptée et est apte à recevoir et/ou transmettre des ondes électromagnétiques. Lorsque que le microcontrôleur 300 commande la fermeture d'un interrupteur, l'antenne RFID interne reliée à l'interrupteur n'est plus adaptée et n'est plus apte à recevoir et/ou transmettre des ondes électromagnétiques.

Trois antennes RFID internes 307a, 307b et 307c sont représentées en Fig. 3, la carte électronique pouvant être reliée à moins ou plus d'antennes RFID internes.

Les antennes RFID internes 307a, 307b et 307c sont des éléments de l'ensemble constitué par les relais R12, R13 et RL4 et l'antenne An1.

La carte électronique I_{DV4} est reliée à l'antenne RFID élément du relais R14. L'antenne RFID transforme l'énergie électromagnétique des signaux en un signal électrique qui est délivré au module d'alimentation 304. Le module d'alimentation 304 délivre l'énergie électrique pour alimenter les composants de la carte électronique I_{DV4}.

La carte électronique I_{DV4} comporte un microcontrôleur 300. Le microcontrôleur 300 est capable d'exécuter des instructions chargées dans la mémoire volatile 303 à partir de la mémoire non volatile 302 lorsque la carte électronique I_{DV4} selon la présente invention est mise sous tension. Le microcontrôleur est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 5.

La carte électronique I_{DV4} est reliée à une antenne RFID interne par l'intermédiaire du module d'activation d'antennes 306.

Le module d'activation d'antennes 306 est par exemple constitué d'un interrupteur. Lorsque que le microcontrôleur 300 commande la fermeture d'un interrupteur, l'antenne RFID interne reliée à l'interrupteur est adaptée et est apte à recevoir et/ou transmettre des ondes électromagnétiques. Lorsque le microcontrôleur 300 commande la fermeture d'un interrupteur, l'antenne RFID interne reliée à l'interrupteur n'est plus adaptée et n'est plus apte à recevoir et/ou transmettre des ondes électromagnétiques.

L'antenne RFID interne est un élément du relais R15 et/ou est l'antenne An5.

La Fig. 4 représente un exemple d'algorithme exécuté par le point de lecture selon la présente invention.

A l'étape E400, le point de lecture 10 identifie l'espace clos V1. Le point de lecture 10 commande la génération d'ondes électromagnétiques qui sont reçues par l'antenne Ante qui fournit un signal électrique permettant d'alimenter la carte électronique I_{DV1}. En réponse, la carte électronique I_{DV1} commande le transfert, par l'intermédiaire de l'antenne Ante, d'ondes électromagnétiques qui comportent l'identifiant unique de la carte électronique I_{DV1}. Le point de lecture 10 à la réception des ondes électromagnétiques identifie l'espace clos V1.

A l'étape E401, le point de lecture 10 identifie l'individu qui souhaite faire l'inventaire de l'espace clos. L'identification est par exemple effectuée par la saisie par l'individu d'informations l'identifiant au sein du système d'inventaire.

A l'étape E402, le point de lecture 10 détermine si l'individu est habilité à effectuer l'inventaire de chaque espace clos V1 à V5.

Si l'individu est habilité à effectuer l'inventaire d'au moins un sous-espace clos, le point de lecture 10 passe à l'étape E403. Dans la négative, le point de lecture 10 interrompt le présent algorithme.

A l'étape E403, le point de lecture 10 commande le transfert d'une commande sous la forme d'ondes électromagnétiques à destination de la carte électronique I_{DV1}. Le message comprend un code d'identification et une information identifiant l'espace clos ou le sous-espace clos pour lequel l'inventaire est demandé. Le code d'identification et l'information identifiant l'espace clos ou le sous-espace clos pour lequel l'inventaire est demandé sont mémorisés dans la mémoire du Tag double accès de la carte électronique I_{DV1}.

A cette même étape, le point de lecture 10 active un compteur temporel noté T.

A l'étape E404, le point de lecture 10 reçoit par l'intermédiaire de l'antenne Ants, des ondes électromagnétiques comportant des identifiants de tag d'objets ainsi que l'identifiant du volume clos ou du sous volume clos identifié dans la commande émise à l'étape E403.

A l'étape E405, le point de lecture 10 vérifie si la valeur du compteur temporel T est égale à la première durée X.

Dans la négative, le point de lecture 10 retourne à l'étape E404. Dans l'affirmative, le point de lecture 10 passe à l'étape E406.

Il est à remarquer ici que pendant la durée X, l'antenne RFID du volume clos V1, voire l'antenne du sous volume clos pour lequel l'inventaire est demandé, est adaptée. Les antennes RFID du ou des sous volumes clos ne devant pas être inventoriées ne sont pas adaptées et ne sont ainsi pas aptes à recevoir ou transmettre des ondes électromagnétiques.

A l'étape E406, optionnelle, le point de lecture 10 vérifie si un sous volume est présent dans le sous volume identifié. Par exemple, lorsque le sous volume V4 est identifié, le point de lecture 10 vérifie si l'identifiant du sous volume V5 est reçu.

Dans l'affirmative, le point de lecture 10 passe à l'étape E408. Dans la négative, le point de lecture 10 passe à l'étape E407 et notifie que l'inventaire du sous volume V4 a échoué. En variante, le point de lecture 10 continue le présent algorithme.

A l'étape E408, le point de lecture 10 vérifie si toutes les sous zones pour lesquelles l'individu est habilité à effectuer l'inventaire ont été inventoriées. Dans la négative, le point de lecture passe à l'étape E409. Dans l'affirmative, le point de lecture 10 passe à l'étape E410.

A l'étape E409, le point de lecture 10 sélectionne une autre sous zone non inventoriée et retourne à l'étape E403.

A l'étape E410, le point de lecture 10 commande le transfert d'une commande sous la forme d'ondes électromagnétiques à destination de la carte électronique I_{DV1} pour que l'antenne de l'espace clos soit désadaptée afin qu'elle ne soit plus apte à recevoir ou transmettre des ondes électromagnétiques. Cette commande est mémorisée dans le tag double accès de la carte électronique I_{DV1}. La commande est une commande pour désadapter l'antenne correspondant au sous-espace clos identifié.

A l'étape E411, le point de lecture 10 reçoit éventuellement par l'intermédiaire de l'antenne Ants, des ondes électromagnétiques comportant des identifiants de tag d'objets.

A l'étape E412, le point de lecture 10 vérifie si la valeur du compteur temporel T est égale à une seconde durée Y.

Dans la négative, le point de lecture 10 retourne à l'étape E411. Dans l'affirmative, le point de lecture 10 passe à l'étape E413.

Il est à remarquer ici que pendant la durée Y-X, les antennes RFID du volume clos V1 et de chaque sous volume clos ne sont pas adaptées et ne sont ainsi pas aptes à recevoir ou transmettre des ondes électromagnétiques. Seuls les tags reçus à l'étape E411 sont des tags d'objets placés sur le volume clos V1 ou par exemple dans la poche de l'individu faisant l'inventaire.

A l'étape E413, le point de lecture 10 fait l'inventaire de l'espace clos ou d'une partie des sous-espaces clos en mémorisant les identifiants reçus à l'étape E404 et non reçus à l'étape E411. En effet, un identifiant reçu à l'étape E411 n'est pas compris dans l'espace clos.

L'inventaire est ensuite délivré à la personne habilitée.

La Fig. 5 représente un exemple d'algorithme exécuté par un microcontrôleur de la carte électronique comprise dans l'espace clos selon la présente invention.

A l'étape E500, la carte électronique reçoit des ondes électromagnétiques qui sont reçues par l'antenne Ante qui fournit un signal électrique permettant d'alimenter la carte électronique I_{DV1}. Lorsque le module d'alimentation 304 dispose de l'énergie électrique suffisante, le microcontrôleur 300 est activé ainsi que les différents composants de la carte électronique I_{DV1}.

A l'étape E501, le tag double accès de la carte électronique transfère par l'intermédiaire de l'antenne Ante des ondes électromagnétiques qui comportent l'identifiant unique de la carte électronique.

A l'étape E502, le microcontrôleur 300 vérifie si une commande est mémorisée dans la mémoire du tag double accès D de la carte électronique. La commande est celle transmise à l'étape E403 de la Fig. 4. La commande comprend un code d'identification et une information identifiant l'espace ou le sous-espace clos pour lequel l'inventaire est demandé.

A l'étape E503, le microcontrôleur vérifie si le code d'identification est compatible avec le code de vérification mémorisé dans la mémoire EEPROM du microcontrôleur.

Si les codes sont compatibles, la carte électronique passe à l'étape E504. Dans la négative, la carte électronique passe à l'étape E508 et n'exécute pas la commande mémorisée.

A l'étape E504, la carte électronique identifie l'espace ou un sous-espace devant être inventorié et à l'étape E505 le microcontrôleur 300 commande au module d'activation 306 d'adapter une antenne du relais du sous-espace clos devant être inventorié ou d'adapter l'antenne An1 de l'espace clos V1. Il est à remarquer ici que l'adaptation d'une antenne d'un relais désadapte une antenne d'un relais précédemment adaptée.

Par exemple, lorsque la commande identifie le sous-espace clos V4, la carte électronique I_{DV1} active l'antenne du relais RL4 et la carte électronique I_{DV4} comprise dans le sous-espace clos V4 active l'antenne du relais RL4 ainsi que l'antenne An4.

A l'étape E506, le microcontrôleur 300 vérifie si une nouvelle commande est mémorisée dans la mémoire du tag double accès de la carte électronique. La commande est une commande pour désadapter l'antenne correspondant au sous-espace clos identifié.

A l'étape E507, le microcontrôleur 300 commande au module d'activation 306 de désadapter l'antenne correspondant au sous-espace clos identifié.

## Revendications

1. Procédé d'inventaire d'objets contenus dans un espace clos délimité par une enceinte (V1) dans un système comprenant un tag fixé à chacun des objets à inventorier (50) et un point de lecture (10) pourvu d'au moins une antenne (Ants) pour émettre une onde électromagnétique de réveil dans ledit espace clos (V1) afin qu'un tag (50, Idv1), à sa réception, devienne actif et émette alors ses données d'identification à destination dudit point de lecture (10),
**caractérisé en ce que** l'espace
clos comporte une carte électronique comprenant un microcontrôleur et un tag double accès dont la
mémoire est accessible par les ondes électromagnétiques émises par le point de lecture et accessible par le microcontrôleur, la carte électronique comportant en outre une mémoire accessible uniquement par le microcontrôleur, l'espace clos comportant au moins une antenne , le procédé comportant les étapes exécutées par le microcontrôleur de :
- détection d'une commande émise par le point de lecture et mémorisée dans la mémoire du tag double accès, la commande comprenant au moins un code d'identification,
- vérification de la compatibilité du code d'identification avec un code d'authentification mémorisé dans la mémoire accessible uniquement par le microcontrôleur,
- activation de l'antenne seulement si les codes sont compatibles.

2. Procédé selon la revendication 1, **caractérisé en ce que** l'espace clos comprend un sous-espace clos et un relais composé d'antennes pour relayer les ondes électromagnétiques entre l'espace clos et le sous-espace clos, la commande émise par le point de lecture et mémorisée dans la mémoire du tag double accès comportant en outre une information identifiant un sous-espace clos, et **en ce que** le microcontrôleur commande l'activation d'une antenne du relais seulement si le code d'identification est compatible avec un code d'authentification mémorisé dans la mémoire accessible uniquement par le microcontrôleur.

3. Procédé selon la revendication 2, **caractérisé en ce que** l'espace clos comprend une pluralité de sous-espaces clos, l'espace clos comportant pour chaque sous-espace clos un relais composé d'antennes pour relayer les ondes électromagnétiques entre l'espace clos et le sous-espace clos, et **en ce que** le procédé comporte les étapes exécutées par le microcontrôleur de :
- détection d'une commande émise par le point de lecture et mémorisée dans la mémoire du tag double accès, la commande comprenant au moins une information identifiant un sous-espace clos,
- activation d'une antenne du relais du sous-espace clos identifié et désactivation des antennes des autres relais.

4. Procédé selon la revendication 3, **caractérisé en ce que** le procédé comporte les étapes exécutées par le microcontrôleur de :
- détection d'une commande émise par le point de lecture et mémorisée dans la mémoire du tag double accès, la commande indiquant que les antennes des relais doivent être désactivées,
- désactivation d'une antenne de chaque relais.

5. Procédé selon l'une quelconque des revendications 1 à 4, **caractérisé en ce que** préalablement à l'émission de la commande par le point de lecture, le procédé comporte les étapes exécutées par le point de lecture de :
- identification d'un individu qui souhaite faire l'inventaire de l'espace clos,
- détermination si l'individu est habilité à effectuer l'inventaire d'au moins un sous-espace clos,
- transfert séquentiel d'une commande pour chaque sous-espace clos pour lequel l'individu est habilité.

6. Procédé selon la revendication 5, **caractérisé en ce que** chaque sous-espace clos comporte un tag, le procédé comportant une étape, exécutée par le point de lecture pour chaque sous-espace clos pour lequel l'individu est habilité, de réception des identifiants des objets qui sont compris dans le sous-espace clos et de l'identifiant du sous-espace clos et lorsque les identifiants des objets et des identifiants des sous-espaces clos sont reçus, le procédé comporte en outre les étapes de :
- émission par le point de lecture et mémorisée dans la mémoire du tag double accès, de la commande indiquant que les antennes des relais doivent être désactivées,
- activation d'une fenêtre temporelle pour la réception d'identifiants d'objets,
- inventaire des objets en ne prenant pas en compte les objets dont les identifiants sont reçus pendant la fenêtre temporelle.

7. Procédé selon l'une quelconque des revendications 1 à 6, **caractérisé en ce qu'**un sous-espace comprend un autre sous-espace clos et une autre carte électronique comprenant un microcontrôleur et un tag et **en ce que** lorsque la commande identifie l'autre sous-espace clos, la carte électronique comprise dans le sous-espace clos active l'antenne du relais du sous-espace clos comprenant l'autre sous-espace clos et la carte électronique comprise dans le sous-espace clos active l'antenne du relais de l'autre sous-espace clos.

8. Procédé selon la revendication 7, **caractérisé en ce que** si le point de lecture ne reçoit pas l'identifiant de l'autre sous-espace clos, le point de contrôle génère un message d'échec d'inventaire à destination de l'individu.

9. Système d'inventaire d'objets contenus dans un espace clos délimité par une enceinte (V1), ledit système comprenant un tag fixé à chacun des objets à inventorier (50) et un point de lecture (10) pourvu d'au moins une antenne (Ants) pour émettre une onde électromagnétique de réveil dans ledit espace clos (V1) afin qu'un tag (50, Idv1), à sa réception, devienne actif et émette alors ses données d'identification à destination dudit point de lecture (10),
**caractérisé en ce que** l'espace clos comporte
une carte électronique comprenant un microcontrôleur et un tag double accès dont la mémoire est accessible par les ondes électromagnétiques émises par le point de lecture et accessible par le microcontrôleur, la carte électronique comportant en outre une mémoire accessible uniquement par le microcontrôleur et **en ce que** l'espace clos comporte au moins une antenne , le microcontrôleur détectant une commande émise par le point de lecture et mémorisée dans la mémoire du tag double accès, la commande comprenant au moins un code d'identification, et **en ce que** le microcontrôleur commande l'activation d'une antenne seulement si le code d'identification est compatible avec un code d'authentification mémorisé dans la mémoire accessible uniquement par le microcontrôleur.

10. Système selon la revendication 9, **caractérisé en ce que** l'espace clos comprend un sous-espace clos et un relais composé d'antennes pour relayer les ondes électromagnétiques entre l'espace clos et le sous-espace clos, la commande émise par le point de lecture et mémorisée dans la mémoire du tag double accès comportant en outre une information identifiant un sous-espace clos et **en ce que** le microcontrôleur commande l'activation d'une antenne du relais seulement si le code d'identification est compatible avec un code d'authentification mémorisé dans la mémoire accessible uniquement par le microcontrôleur.

11. Système selon la revendication 10, **caractérisé en ce que** l'alimentation en énergie électrique de la carte électronique est assurée à partir des ondes émises par le point de lecture.

## Patentansprüche

1. Verfahren zur Bestandsverwaltung von Gegenständen, die in einem durch eine Kammer abgegrenzten geschlossenen Raum (V1) enthalten sind, in einem System, das Folgendes beinhaltet: ein Tag, das an jedem der Gegenstände (50), die der Bestandsverwaltung unterzogen werden sollen, befestigt ist, und einen Lesepunkt (10), der über mindestens eine Antenne (Ants) verfügt, um eine elektromagnetische Welle als Weckfunktion in den geschlossenen Raum (V1) auszusenden, damit ein Tag (50, Idv1) bei deren Empfang aktiv wird und als Reaktion seine Identifikationsdaten an den Lesepunkt (10) sendet, **dadurch gekennzeichnet, dass** der geschlossene Raum eine elektronische Karte umfasst, die einen Mikrocontroller und ein Tag mit Doppelzugriff beinhaltet, auf dessen Speicher die elektromagnetischen Wellen, die durch den Lesepunkt ausgesendet werden, und der Mikrocontroller zugreifen können, wobei die elektronische Karte ferner einen Speicher umfasst, auf den nur der Mikrocontroller zugreifen kann, wobei der geschlossene Raum mindestens eine Antenne umfasst, wobei das Verfahren die folgenden Schritte umfasst, die durch den Mikrocontroller ausgeführt werden:
- Detektieren eines Befehls, der durch den Lesepunkt ausgesendet und in dem Speicher des Tags mit Doppelzugriff gespeichert wird, wobei der Befehl mindestens einen Identifikationscode beinhaltet,
- Prüfen der Kompatibilität des Identifikationscodes mit einem Authentifizierungscode, der in dem Speicher, auf den nur der Mikrocontroller zugreifen kann, gespeichert ist,
- Aktivieren der Antenne nur dann, wenn die Codes kompatibel sind.

2. Verfahren nach Anspruch 1, **dadurch gekennzeichnet, dass** der geschlossene Raum einen geschlossenen Teilraum und ein Relais, das aus Antennen besteht, um die elektromagnetischen Wellen zwischen dem geschlossenen Raum und dem geschlossenen Teilraum zu übermitteln, beinhaltet, wobei der Befehl, der durch den Lesepunkt ausgesendet und in dem Speicher des Tags mit Doppelzugriff gespeichert wird, ferner eine Information umfasst, die einen geschlossenen Teilraum identifiziert, und dass der Mikrocontroller die Aktivierung einer Antenne des Relais nur dann befiehlt, wenn der Identifikationscode mit einem Authentifizierungscode kompatibel ist, der in dem Speicher, auf den nur der Mikrocontroller zugreifen kann, gespeichert ist.

3. Verfahren nach Anspruch 2, **dadurch gekennzeichnet, dass** der geschlossene Raum eine Vielzahl von geschlossenen Teilräumen beinhaltet, wobei der geschlossene Raum für jeden geschlossenen Teilraum ein Relais umfasst, das aus Antennen besteht, um die elektromagnetischen Wellen zwischen dem geschlossenen Raum und dem geschlossenen Teilraum weiterzuleiten, und dass das Verfahren die folgenden Schritte umfasst, die durch den Mikrocontroller ausgeführt werden:
- Detektieren eines Befehls, der durch den Lesepunkt ausgesendet und in dem Speicher des Tags mit Doppelzugriff gespeichert wird, wobei der Befehl mindestens eine Information beinhaltet, die einen geschlossenen Teilraum identifiziert,
- Aktivieren einer Antenne des Relais des identifizierten geschlossenen Teilraums und Deaktivieren der Antennen der anderen Relais.

4. Verfahren nach Anspruch 3, **dadurch gekennzeichnet, dass** das Verfahren die folgenden Schritte umfasst, die durch den Mikrocontroller ausgeführt werden:
- Detektieren eines Befehls, der durch den Lesepunkt ausgesendet und in dem Speicher des Tags mit Doppelzugriff gespeichert wird, wobei der Befehl angibt, dass die Antennen der Relais deaktiviert werden sollen,
- Deaktivieren einer Antenne jedes Relais.

5. Verfahren nach einem beliebigen der Ansprüche 1 bis 4, **dadurch gekennzeichnet, dass** vor dem Aussenden des Befehls durch den Lesepunkt das Verfahren die folgenden Schritte umfasst, die durch den Lesepunkt ausgeführt werden:
- Identifizieren einer Person, die die Bestandsverwaltung des geschlossenen Raums durchführen möchte,
- Bestimmen, ob die Person berechtigt ist, die Bestandsverwaltung mindestens eines geschlossenen Teilraums durchzuführen,
- sequentielles Übertragen eines Befehls für jeden geschlossenen Teilraum, für den die Person berechtigt ist.

6. Verfahren nach Anspruch 5, **dadurch gekennzeichnet, dass** jeder geschlossene Teilraum ein Tag umfasst, wobei das Verfahren einen Schritt, der durch den Lesepunkt für jeden geschlossenen Teilraum, für den die Person berechtigt ist, ausgeführt wird, des Empfangens der Kennungen der Gegenstände, die in dem geschlossenen Teilraum enthalten sind, und der Kennung des geschlossenen Teilraums umfasst und, wenn die Kennungen der Gegenstände und Kennungen der geschlossenen Teilräume empfangen wurden, das Verfahren ferner die folgenden Schritte umfasst:
- Aussenden, durch den Lesepunkt und zur Speicherung in dem Speicher des Tags mit Doppelzugriff, des Befehls, der angibt, dass die Antennen der Relais deaktiviert werden sollen,
- Aktivieren eines Zeitfensters für das Empfangen von Kennungen von Gegenständen,
- Unterziehen der Gegenstände einer Bestandsverwaltung, wobei die Gegenstände, deren Kennungen während des Zeitfensters empfangen werden, nicht berücksichtigt werden.

7. Verfahren nach einem beliebigen der Ansprüche 1 bis 6, **dadurch gekennzeichnet, dass** ein Teilraum einen anderen geschlossenen Teilraum und eine andere elektronische Karte, die einen Mikrocontroller und ein Tag beinhaltet, beinhaltet und dass, wenn der Befehl den anderen geschlossenen Teilraum identifiziert, die in dem geschlossenen Teilraum enthaltene elektronische Karte die Antenne des Relais des geschlossenen Teilraums, der den anderen geschlossenen Teilraum beinhaltet, aktiviert und die in dem geschlossenen Teilraum enthaltene elektronische Karte die Antenne des Relais des anderen geschlossenen Teilraums aktiviert.

8. Verfahren nach Anspruch 7, **dadurch gekennzeichnet, dass**, wenn der Lesepunkt die Kennung des anderen geschlossenen Teilraums nicht empfängt, der Kontrollpunkt eine Nachricht über das Fehlschlagen der Bestandsverwaltung an die Person erzeugt.

9. Bestandsverwaltungssystem für Gegenstände, die in einem durch eine Kammer abgegrenzten geschlossenen Raum (V1) enthalten sind, wobei das System Folgendes beinhaltet: ein Tag, das an jedem Gegenstand (50), der der Bestandsverwaltung unterzogen werden soll, befestigt ist, und einen Lesepunkt (10), der über mindestens eine Antenne (Ants) verfügt, um eine elektromagnetische Welle als Weckfunktion in den geschlossenen Raum (V1) auszusenden, damit ein Tag (50, Idv1) bei deren Empfang aktiv wird und als Reaktion seine Identifikationsdaten an den Lesepunkt (10) sendet,
**dadurch gekennzeichnet, dass** der geschlossene Raum eine elektronische Karte umfasst, die einen Mikrocontroller und ein Tag mit Doppelzugriff beinhaltet, auf dessen Speicher die elektromagnetischen Wellen, die durch den Lesepunkt ausgesendet werden, und der Mikrocontroller zugreifen können, wobei die elektronische Karte ferner einen Speicher umfasst, auf den nur der Mikrocontroller zugreifen kann, und dass der geschlossene Raum mindestens eine Antenne umfasst, wobei der Mikrocontroller einen Befehl detektiert, der durch den Lesepunkt ausgesendet und in dem Speicher des Tags mit Doppelzugriff gespeichert wird, wobei der Befehl mindestens einen Identifikationscode beinhaltet, und dass der Mikrocontroller die Aktivierung einer Antenne nur dann befiehlt, wenn der Identifikationscode mit einem Authentifizierungscode kompatibel ist, der in dem Speicher, auf den nur der Mikrocontroller zugreifen kann, gespeichert ist.

10. System nach Anspruch 9, **dadurch gekennzeichnet, dass** der geschlossene Raum einen geschlossenen Teilraum und ein Relais, das aus Antennen besteht, um die elektromagnetischen Wellen zwischen dem geschlossenen Raum und dem geschlossenen Teilraum zu übermitteln, beinhaltet, wobei der Befehl, der durch den Lesepunkt ausgesendet und in dem Speicher des Tags mit Doppelzugriff gespeichert wird, ferner eine Information umfasst, die einen geschlossenen Teilraum identifiziert, und dass der Mikrocontroller die Aktivierung einer Antenne des Relais nur dann befiehlt, wenn der Identifikationscode mit einem Authentifizierungscode kompatibel ist, der in dem Speicher, auf den nur der Mikrocontroller zugreifen kann, gespeichert ist.

11. System nach Anspruch 10, **dadurch gekennzeichnet, dass** die Stromversorgung der elektronischen Karte durch die durch den Lesepunkt ausgesendeten Wellen sichergestellt wird.

## Claims

1. Method for inventorying objects contained in a closed space bounded by an enclosure (V1) in a system comprising one tag fastened to each of the objects (50) to be inventoried and a reader (10) provided with at least one antenna (Ants) for transmitting a wake-up electromagnetic wave into said closed space (V1) so that a tag (50, Idv1), on reception thereof, becomes active and then transmits its identification data to said reader (10), **characterized in that** the closed space comprises a circuit board comprising a microcontroller and a dual-access tag the memory of which is accessible by the electromagnetic waves transmitted by the reader and accessible by the microcontroller, the circuit board further comprising a memory accessible solely by the microcontroller, the closed space comprising at least one antenna, the method comprising steps executed by the microcontroller of:
- detecting a command transmitted by the reader and stored in the memory of the dual-access tag, the command comprising at least one identification code,
- verifying the compatibility of the identification code with an authentication code stored in the memory accessible solely by the microcontroller,
- activating the antenna only if the codes are compatible.

2. Method according to Claim 1, **characterized in that** the closed space comprises a closed sub-space and a relay composed of antennas for relaying the electromagnetic waves between the closed space and the closed sub-space, the command transmitted by the reader and stored in the memory of the dual-access tag further comprising a datum identifying a closed sub-space, and **in that** the microcontroller commands the activation of an antenna of the relay only if the identification code is compatible with an authentication code stored in the memory accessible solely by the microcontroller.

3. Method according to Claim 2, **characterized in that** the closed space comprises a plurality of closed sub-spaces, the closed space comprising, for each closed sub-space, a relay composed of antennas for relaying the electromagnetic waves between the closed space and the closed sub-space, and **in that** the method comprises steps executed by the microcontroller of:
- detecting a command transmitted by the reader and stored in the memory of the dual-access tag, the command comprising at least one datum identifying a closed sub-space,
- activating an antenna of the relay of the identified closed sub-space and deactivating the antennas of the other relays.

4. Method according to Claim 3, **characterized in that** the method comprises steps executed by the microcontroller of:
- detecting a command transmitted by the reader and stored in the memory of the dual-access tag, the command indicating that the antennas of the relays must be deactivated,
- deactivating one antenna of each relay.

5. Method according to any one of Claims 1 to 4, **characterized in that**, prior to transmission of the command by the reader, the method comprises steps executed by the reader of:
- identifying an individual who wishes to inventory the closed space,
- determining whether the individual is authorized to inventory at least one closed sub-space,
- sequentially transferring one command to each closed sub-spaced for which the individual has authorization.

6. Method according to Claim 5, **characterized in that** each closed sub-space comprises one tag, the method comprising a step, executed by the reader for each closed sub-space for which the individual has authorization, of receiving the identifiers of the objects comprised in the closed sub-space and the identifier of the closed sub-space and, once the identifiers of the objects and the identifiers of the closed sub-spaces have been received, the method further comprises steps in which:
- the command indicating that the antennas of the relays must be deactivated is transmitted by the reader and stored in the memory of the dual-access tag,
- a time window for receiving object identifiers is activated,
- objects are inventoried not taking into account objects the identifiers of which are received during the time window.

7. Method according to any one of Claims 1 to 6, **characterized in that** one sub-space comprises another closed sub-space and another circuit board comprising a microcontroller and a tag and **in that**, when the command identifies the other closed sub-space, the circuit board comprised in the closed sub-space activates the antenna of the relay of the closed sub-space comprising the other closed sub-space and the circuit board comprised in the closed sub-space activates the antenna of the relay of the other closed sub-space.

8. Method according to Claim 7, **characterized in that**, if the reader does not receive the identifier of the other closed sub-space, the reader generates an inventory-fail message for delivery to the individual.

9. System for inventorying objects contained in a closed space bounded by an enclosure (V1), said system comprising one tag fastened to each of the objects (50) to be inventoried and a reader (10) provided with at least one antenna (Ants) for transmitting a wake-up electromagnetic wave into said closed space (V1) so that a tag (50, Idv1), on reception thereof, becomes active and then transmits its identification data to said reader (10), **characterized in that** the closed space comprises a circuit board comprising a microcontroller and a dual-access tag the memory of which is accessible by the electromagnetic waves transmitted by the reader and accessible by the microcontroller, the circuit board further comprising a memory accessible solely by the microcontroller, and **in that** the closed space comprises at least one antenna, the microcontroller detecting a command transmitted by the reader and stored in the memory of the dual-access tag, the command comprising at least one identification code, and **in that** the microcontroller commands the activation of an antenna only if the identification code is compatible with an authentication code stored in the memory accessible solely by the microcontroller.

10. System according to Claim 9, **characterized in that** the closed space comprises a closed sub-space and a relay composed of antennas for relaying the electromagnetic waves between the closed space and the closed sub-space, the command transmitted by the reader and stored in the memory of the dual-access tag further comprising a datum identifying a closed sub-space, and **in that** the microcontroller commands the activation of an antenna of the relay only if the identification code is compatible with an authentication code stored in the memory accessible solely by the microcontroller.

11. System according to Claim 10, **characterized in that** the waves transmitted by the reader are used to supply electrical power to the circuit board.
